(19) Europäisches Patentamt
European Patent Office
Office européen des brevets

(11) **EP 1 267 647 B1**

(12) **FASCICULE DE BREVET EUROPEEN**

(45) Date de publication et mention
de la délivrance du brevet:
**10.08.2005 Bulletin 2005/32**

(51) Int Cl.⁷: **A23P 1/08**, A23L 1/31,
A23L 1/315, A23L 1/325,
A23C 19/09

(21) Numéro de dépôt: **01921420.4**

(22) Date de dépôt: **23.03.2001**

(86) Numéro de dépôt international:
**PCT/FR2001/000889**

(87) Numéro de publication internationale:
**WO 2001/072152 (04.10.2001 Gazette 2001/40)**

(54) **COMPOSITION DE PREFARINAGE POUR PRODUITS ALIMENTAIRES ENROBES CUITS A COEUR ET PROCEDE DE PREPARATION DESDITS PRODUITS**

ZUSAMMENSETZUNG ZUR VORBESTÄUBUNG MIT MEHL EINES BESCHICHTETEN UND GEBACKENEN NAHRUNGSMITTELS

FLOURING COMPOSITION FOR COATED CORE-COOKED FOOD PRODUCTS AND METHOD FOR PREPARING SAID PRODUCTS

(84) Etats contractants désignés:
**AT BE CH CY DE DK ES FI FR GB GR IE IT LI LU MC NL PT SE TR**

(30) Priorité: **24.03.2000 FR 0003795**

(43) Date de publication de la demande:
**02.01.2003 Bulletin 2003/01**

(73) Titulaire: **New Food Ingredients Yorks WF5 9AX (GB)**

(72) Inventeurs:
• **BREUIL, Dominique F-02100 Saint-Quentin (FR)**

• **L'HELGOUALCH'H, Charles F-59800 Lille (FR)**

(74) Mandataire: **Boulinguiez, Didier Cabinet Plasseraud 65/67 rue de la Victoire 75440 Paris Cedex 09 (FR)**

(56) Documents cités:
**WO-A-87/01564          WO-A-98/17129**

• **PATENT ABSTRACTS OF JAPAN vol. 13, no. 589 (C-670), 25 décembre 1989 (1989-12-25) & JP 01 247047 A (NICHIRO GYOGYO KAISHA LTD.), 2 octobre 1989 (1989-10-02)**

## Description

L'invention a pour objet une composition de préfarinage pour la fabrication de produits alimentaires enrobés cuits à coeur.

Elle a également pour objet un procédé de fabrication desdits produits alimentaires, ainsi que l'utilisation, pour la fabrication desdits produits, de ladite composition de préfarinage.

Traditionnellement, le procédé de fabrication de produits enrobés, notamment du type bâtonnets de poisson, de viande ou de légume, produits de type "cordon bleu", "burgers" ou "nuggets" de viande, de poisson ou de légume, consiste :

- à mettre en forme le substrat alimentaire,
- à éventuellement effectuer un préfarinage,
- à appliquer un enrobant liquide suivi d'un enrobant de type pulvérulent,
- éventuellement à appliquer un autre enrobant liquide de type pâte à beignets (également appelé "puff" ou "tempura"),
- à effectuer le plus souvent un préfritage, c'est-à-dire une cuisson brève dans un bain d'huile,
- puis à effectuer un refroidissement, suivi éventuellement d'une congélation ou surgélation.

Les produits finis ainsi obtenus peuvent être consommés rapidement (produits "frais") ou vendus sous forme congelée ou surgelée soit à des consommateurs, soit à des collectivités ou des restaurants, qui procèdent alors avant consommation à un réchauffage desdits produits. Ce réchauffage peut être effectué à la poêle, en friteuse, au four traditionnel ou au four à micro-ondes. Le but est, par cette opération, d'amener la température interne du produit à une valeur apte à la consommation, cette température étant généralement supérieure à 50°C.

Les produits alimentaires ainsi fabriqués donnent entièrement satisfaction, tant au point de vue de l'aspect que des caractéristiques organoleptiques. En particulier, les produits sont croustillants et ne se délitent pas au réchauffage.

Cependant, l'opération, rapide, de préfritage ne permet pas forcément de garantir la totale innocuité bactériologique des produits, qui peuvent donc présenter des risques de contamination par des agents pathogènes tels que salmonelles ou listéria.

Or, les consommateurs sont de plus en plus concernés par la sécurité alimentaire et deviennent donc de plus en plus exigeants en ce qui la concerne.

Les fabricants de ce type de produits alimentaires ont, de ce fait, pensé à introduire dans le procédé de fabrication une étape de cuisson à coeur, ayant pour résultat de porter la température interne du produit à une valeur supérieure à 70°C pour les produits désossés et à 85°C pour les produits avec os.

Cet objectif aurait, bien entendu, pu être atteint lors de l'opération de préfritage en augmentant les températures de bain d'huile et les temps de contact, mais ceci est incompatible avec une bonne qualité des produits finis et entraîne des baisses de productivité considérables. La cuisson à coeur est donc réalisée dans des fours, notamment des fours tunnel à chaleur pulsée, l'opération de cuisson à coeur étant alors réalisée après l'opération de préfritage.

Malheureusement, ce procédé de cuisson à coeur sur four tunnel après l'opération de préfritage présente un inconvénient majeur : celui d'une perte importante de rendement pondéral sur les produits finis. En effet, le fait que la cuisson au four soit réalisée après le préfritage entraîne des déperditions d'eau importantes du produit préfrité.

L'apparition d'une nouvelle génération de fours, du type four spirale à chaleur pulsée, permettant la cuisson dans une atmosphère saturée d'humidité à une température relativement basse, permet d'éliminer cet inconvénient, mais il est alors souhaitable de procéder à l'opération de cuisson en début de ligne de fabrication, avant l'application du système d'enrobage comprenant le ou les enrobant(s) liquide(s) et l'enrobant pulvérulent tels que décrits précédemment.

L'opération de cuisson à coeur intervient donc dans ce procédé avant l'opération de préfritage.

L'utilisation d'une étape de préfarinage, ou "predusting", entre la mise en forme éventuelle du substrat et la cuisson à coeur s'avère alors indispensable afin d'empêcher les pertes en eau du substrat, de capter l'humidité présente dans le four, et de procurer une surface sur laquelle peut s'appliquer et adhérer le système d'enrobage précité.

Le préfarinage ou "predust" est très important en termes de rendement du produit fini, qui est directement relié à l'absorption d'eau ; de cohésion (adhérence sur les protéines coagulées du substrat et adhérence du ou des enrobant(s) venant s'appliquer dessus) ; et de texture, celle-ci devant présenter un degré de croustillance suffisant.

L'utilisation de compositions de préfarinage, ou de "predust", est bien connue dans les techniques d'enrobage.

Un predust est généralement une poudre fine qui est appliquée à la surface du substrat mis en forme avant l'application d'un enrobant liquide ou pulvérulent. Sa présence améliore la cohésion ainsi que la texture du produit. Elle permet également l'augmentation du poids du produit, du fait de l'augmentation de la surface spécifique du substrat avant l'application du ou des enrobant(s).

Outre les performances qu'elle doit conférer au produit, la composition de préfarinage doit être facilement applicable dans les équipements de préfarinage, c'est-à-dire qu'elle doit présenter une bonne homogénéité et de bonnes propriétés d'écoulement, afin notamment de pouvoir contrôler aisément la prise de poids du substrat en composition de préfarinage et afin d'éviter les hétérogénéités sur le produit fini.

De nombreux produits ont déjà été proposés ou sont actuellement utilisés en tant que compositions de préfarinage. On peut ainsi citer, notamment, les fines chapelures, comportant éventuellement des agents levants tels que les bicarbonates d'ammonium ou de sodium (les produits communément désignés sous le terme anglais de "rusk" en sont un exemple), les amidons natifs, les amidons modifiés, les farines de blé, de maïs, de riz ou autre, agglomérées ou non, les protéines de blé, les protéines laitières, sous différentes formes, ainsi que les ovoproduits tels que poudre d'oeuf, blanc d'oeuf ou jaune d'oeuf, très utilisés dans cette application.

Les fabricants cherchant à utiliser le procédé de cuisson à coeur avant préfritage précédemment décrit se sont tout naturellement tournés vers ces compositions de préfarinage conventionnelles de l'art antérieur.

Mais il se trouve qu'aucune de ces compositions ne permet d'obtenir des résultats satisfaisants dans le cadre dudit procédé. En effet, on constate soit une adhérence insuffisante, soit un défaut de cohésion, soit un manque de croustillance du produit fini ou une texture pâteuse, les défauts précités pouvant même être cumulatifs.

La Société Demanderesse s'est attachée à résoudre les problèmes ainsi rencontrés et s'est efforcée de trouver une composition de préfarinage qui puisse répondre à toutes les exigences de la technique, à savoir :

- présenter de bonnes propriétés d'écoulement, pour une bonne utilisation sur la préfarineuse,
- présenter une densité adéquate pour permettre le contrôle satisfaisant de l'augmentation de poids en composition de préfarinage, ceci afin d'être en mesure de garantir de façon fiable la prise en eau du produit après cuisson à coeur, c'est-à-dire le rendement,
- présenter une homogénéité suffisante pour éviter toute ségrégation dans les équipements de préfarinage, celle-ci pouvant entraîner des défauts ou des disparités entre les faces supérieure et inférieure du produit fini,
- assurer une bonne adhérence sur le substrat cuit, dont les protéines sont coagulées,
- faire en sorte que l'eau absorbée au cours de la cuisson puisse migrer suffisamment vers l'intérieur du substrat, procurant ainsi un état de surface suffisamment sec pour permettre une bonne application des enrobants ajoutés ultérieurement,
- conférer une texture croustillante au produit fini après réchauffage,
- conférer de bonnes propriétés organoleptiques, en évitant notamment la perception d'une saveur amylacée trop prononcée.

A ce stade, il est important de souligner que la problématique d'assurer une bonne adhérence d'une composition de préfarinage sur des protéines coagulées (par suite de la cuisson à coeur) est tout autre, et beaucoup plus délicate, que celle d'assurer une bonne adhérence de ladite composition sur des protéines non coagulées, comme c'était le cas dans les procédés de l'art antérieur, ne comportant pas d'étape de cuisson avant préfritage.

A la suite de nombreuses recherches, la Société Demanderesse a eu le mérite de trouver que tous les desiderata ci-dessus exposés étaient satisfaits dès lors que l'on utilisait une composition de préfarinage comprenant :

- une semoule de maïs,
- un amidon modifié,
- et une fine chapelure, celle-ci comportant de préférence un agent levant.

L'invention a donc pour objet une composition de préfarinage comprenant :

- une semoule de maïs,
- un amidon modifié,
- et une fine chapelure, de préférence comportant un agent levant, celui-ci étant préférentiellement du type bicarbonate d'ammonium ou bicarbonate de sodium/phosphate.

De préférence, la composition de préfarinage selon l'invention comprend :

- de 5 à 70%, de préférence de 10 à 60%, et plus préférentiellement encore de 15 à 50% de semoule de maïs,
- de 5 à 70%, de préférence de 10 à 60%, et plus préférentiellement encore de 15 à 50% d'amidon modifié,
- de 10 à 70%, de préférence de 15 à 60%, et plus préférentiellement encore de 20 à 55% de fine chapelure.

Selon une réalisation préférentielle de l'invention, on utilise comme amidon modifié un amidon choisi parmi les amidons réticulés estérifiés, les amidons oxydés ou leurs mélanges. Des exemples de tels amidons modifiés sont les suivants : BATTERCRISP 05530 et 05548 de la Société CERESTAR, BATTER UP de la Société STALEY, BATTERBIND S et SC de la Société NATIONAL STARCH, et amidon SAPHIR de la Société CRESPEL & DEITERS.

Selon une autre réalisation préférentielle de l'invention, on utilise comme fine chapelure un produit du type "RUSK", qui est une chapelure obtenue par broyage d'un produit de cuisson à base de farine de blé, d'eau, de sel et d'un agent levant, généralement constitué par le bicarbonate d'ammonium. On utilise avantageusement un produit tel que le "RUSK XF 40" de la Société RHM INGREDIENTS.

La granulométrie de la fine chapelure utilisée conformément à l'invention est de préférence choisie de telle manière que 95% des particules aient une dimension inférieure à 710 microns. A titre d'exemple, le RUSK XF 40 présente la granulométrie type suivante :

particules supérieures à 0.85 mm : néant,
particules supérieures à 0.425 mm : 15% max,
particules inférieures à 0.425 mm : 85% max.

Par ailleurs, la fine chapelure utilisée conformément à l'invention présente, de préférence, une hauteur d'écoulement comprise entre 2 cm et 4 cm, plus préférentiellement comprise entre 2,5 cm et 3,5 cm, cette hauteur d'écoulement étant déterminée d'après un test A qui sera décrit ci-après.

La semoule de maïs entrant dans la composition de préfarinage selon l'invention peut être par exemple un produit du genre de ceux qui sont commercialisés par la Société CHAMPAGNE MAÏS sous les dénominations "REFINED MAIZE GRITS S" ou par la Société MAIZECOR FOODS sous la dénomination "MEDIUM POLENTA". De préférence, la semoule de maïs utilisée présente une granulométrie telle que 95% des particules soient inférieures à 710 microns. Les produits tels que les "REFINED MAIZE GRITS S40 et S50" de la Société CHAMPAGNE MAÏS peuvent ainsi être avantageusement utilisés.

La composition de préfarinage conforme à l'invention peut en outre comprendre d'autres ingrédients tels que :

- des liants protéiques, particulièrement à base de protéines laitières, de gluten de blé et de protéines d'oeufs,
- des sels,
- des farines, notamment de blé et de maïs,
- des produits d'hydrolyse de l'amidon, tels que dextrines, maltodextrines, sirops de glucose déshydratés, dextrose,
- des celluloses modifiées,
- des arômes et des épices.

De façon générale, ces ingrédients sont présents en une quantité inférieure à 25%, et de préférence inférieure à 15% en poids du poids total de la composition.

La composition de préfarinage conforme à l'invention présente avantageusement une hauteur d'écoulement, dans le test A qui sera décrit ci-après, comprise entre 2,5 cm et 6 cm, de préférence entre 3,5 cm et 4,5 cm.

Le procédé de fabrication d'un produit alimentaire enrobé cuit à coeur conforme à l'invention comprend quant à lui :

- une étape de sélection d'un substrat alimentaire, tel que viande de volaille, poisson, crustacé, légume, fromage, fruit...
- une étape de préfarinage,
- une étape de cuisson à coeur, notamment dans un four spirale à chaleur pulsée,
- une étape d'enrobage, avec des enrobants liquides ou des enrobants pulvérulents tels que chapelures, farines et amidons, mélanges de diverses chapelures ou de chapelures et d'épices, mélanges de chapelures et de farines et d'amidons, et mélanges de farines et d'épices et d'amidons, éventuellement additionnés d'arômes,
- une étape de préfritage,
- une étape de refroidissement,

et il est caractérisé par le fait que l'étape de préfarinage est réalisée avec une composition comprenant une semoule de maïs, un amidon modifié et une fine chapelure et par le fait que l'étape de cuisson à coeur est réalisée avant l'étape de préfritage.

Cette étape de cuisson à coeur est réalisée de telle manière que la température au coeur du produit atteigne au moins 70°C lorsqu'il s'agit de légumes, de fruits, de poissons ou de viandes désossées, et atteigne une température d'au moins 85°C lorsqu'il s'agit de viandes avec os.

L'étape de préfritage est réalisée par exemple dans une friteuse continue, à des températures comprises le plus généralement entre 175°C et 205°C, pour des temps de préfritage compris entre 15 secondes et 1 minute.

L'étape de refroidissement peut être suivie directement d'un conditionnement ou être suivie d'une étape de congélation ou de surgélation et d'un conditionnement.

La quantité de composition de préfarinage qui est apportée sur le substrat alimentaire lors de l'étape de préfarinage est généralement comprise entre 0.5% et 14% en poids du substrat alimentaire. De préférence, cette quantité est comprise entre 1% et 10% et plus préférentiellement encore entre 3 et 6%.

Grâce à la composition de préfarinage et au procédé de fabrication conforme à l'invention, on obtient des produits alimentaires enrobés qui présentent d'excellentes caractéristiques de texture et de goût, qui sont exempts de tous risques bactériologiques, qui ne nécessitent pas, comme c'était généralement le cas dans l'art antérieur, la présence d'ovoproduits (pouvant entraîner des réactions allergènes).

L'invention pourra être mieux comprise à l'aide des descriptions et exemples qui suivent, exemples qui sont donnés à titre purement illustratif.

## DESCRIPTION DU TEST A (TEST DU CONE) :

Le test A servant à déterminer la hauteur d'écoulement est réalisé de la façon suivante :

### Principe

Mesuré de la hauteur du cône formé par le dépôt d'échantillon sur un cylindre.

### Matériel

- 1 cylindre métallique, dimension $\phi$ 48 mm, hauteur 80 mm.
- 1 tamis d'ouverture 1 mm.
- 1 support pour le tamis.
- 1 pinceau.

### Mode opératoire

- Poser le cylindre sur un plateau.
- Placer le tamis à quinze centimètres au-dessus du cylindre.
- Mettre l'échantillon sur le tamis et le faire passer doucement à travers à l'aide du pinceau.
- Lorsque le cône est formé et que sa taille n'évolue plus, retirer le tamis.
- Mesurer le cône de sa base à son sommet.

On note alors sa valeur en centimètres.

## DESCRIPTION DU TEST B (ABSORPTION D'EAU) :

On prend 10 nuggets de poulet, d'un poids moyen de 14g $\pm$ 0.5g, que l'on pèse précisément.

On enrobe ces nuggets à la main avec une composition de préfarinage, en prenant bien soin de souffler l'excès de cette composition et on pèse le poids des nuggets ainsi enrobés. La prise de poids est calculée comme suit :

$$\text{Prise de poids moyenne en enrobant} = \frac{\text{Poids après enrobage - Poids initial}}{10}$$

On cuit ensuite ces nuggets dans un four de type Combi Climaplus FCP de la Société FRIMA dans les conditions suivantes :

| | |
|---|---|
| - température | 100°C |
| - point de rosée | 100°C |
| - temps | 4 min. |

Après cuisson, les nuggets sont à nouveau pesés. On calcule la prise de poids moyenne (en grammes) comme suit:

$$\text{Prise de poids moyenne en eau} = \frac{\text{Poids après cuisson four - Poids après enrobage}}{10}$$

et on la ramène à l'unité de poids de la composition enrobante en divisant par la prise de poids moyenne, pour obtenir la capacité d'absorption d'eau par unité de poids d'enrobant :

$$\text{Capacité d'absorption (\%)} = \frac{\text{Prise de poids moyenne en eau}}{\text{Prise de poids moyenne en enrobant}} \times 100$$

## Exemples

Un même substrat a été utilisé pour tous les exemples. Il s'agit d'un produit à base de viande de poulet reformée ayant la composition suivante :

| | |
|---|---|
| Viande de poulet | 83.3% |
| Eau | 15% |
| Sel | 1.5% |
| Poivre blanc | 0.2% |

La viande est hachée, barattée en présence de la saumure puis remise en forme dans un moule de type Teflon.

Conditions de barattage :

| | |
|---|---|
| Temps total = | 1 heure |
| Durée des pauses = | 5 minutes |
| Durée des barattages = | 15 minutes |

On met en forme le substrat précédemment décrit sous forme de nuggets d'un poids moyen de 14g ±0.5g. Les produits sont alors enrobés suivant le procédé décrit ci-après.

**EXEMPLE 1 : Fabrication de "nuggets" de poulet d'après le procédé de l'art antérieur, faisant intervenir une étape de préfritage mais sans cuisson.**

| | | |
|---|---|---|
| **MISE EN FORME SUBSTRAT** | | Poids : 170 gr (12 pièces) |
| ↓ | | |
| **PREFARINAGE** | Predust type XF40 | Poids : 181 gr (10 pièces) Prise en poids : 6% |
| ↓ | | |
| **ENROBANT LIQUIDE** | Enrobant type Batter 66306 Dilution= 1 part poudre/ 2 parts eau | |
| ↓ | | |
| **ENROBANT SEC** | Enrobant type Chapelure Frokrum 21250 | Poids : 268 gr Prise en poids : 37% |
| ↓ | | |
| **PREFRITAGE** | Température : 182°C Temps = 41 secondes | Poids : 280 gr Rendement friteuse 104.5% |
| ↓ | | |
| **SURGELATION** | | |

Dans cet exemple et dans les exemples qui suivent, la prise en poids est calculée comme suit :

$$\text{Prise en poids} = \frac{\text{poids final - poids initial}}{\text{poids final}}$$

Les produits congelés sont réchauffés en friteuse à une température de 170°C pour obtenir une température à coeur d'au moins 50°C.

On observe après réchauffage une bonne adhérence de l'enrobant sur le substrat, une bonne croustillance et de bonnes caractéristiques organoleptiques.

Le rendement obtenu après préfritage est de 104.5%, ce qui est conforme aux valeurs habituellement observées dans ce procédé de préparation de produits enrobés.

**EXEMPLE 2 : Fabrication de "nuggets" de poulet avec un procédé comportant une cuisson à coeur, cette cuisson étant située après le préfritage.**

On utilise le même type de substrat que dans l'Exemple 1.

| MISE EN FORME SUBSTRAT | | Poids : 170 gr (12 pièces) |
|---|---|---|
| ↓ | | |
| PREFARINAGE | Predust type XF40 | Poids : 180 gr Prise en poids : 5.5% |
| ↓ | | |
| ENROBANT LIQUIDE | Enrobant type Batter 66306 Dilution = 1 part poudre / 2 parts eau | |
| ↓ | | |
| ENROBANT SEC | Enrobant type Chapelure Frokrum 21250 | Poids : 265 gr Prise en poids : 35.9 % |
| ↓ | | |
| PREFRITAGE | Température :182°C Temps = 41 secondes | Poids : 280 gr Rendement friteuse:105.7% |
| ↓ | | |
| CUISSON FOUR (FOUR TUNNEL) | Température :180°C Point de rosée:63°C Temps = 3 minutes Température à cœur après cuisson: 75°C | Poids : 275 gr Rendement four : 98% Rendement final : 103.7% |
| ↓ | | |
| SURGELATION | | |

Les produits congelés sont réchauffés comme dans l'exemple 1.

On a une bonne adhérence de l'enrobant sur le substrat ainsi qu'une bonne croustillance et de bonnes caractéristiques organoleptiques.

Cet exemple illustre qu'avec le procédé classique utilisé dans l'art antérieur on obtient de très bons résultats en utilisant comme Predust une fine chapelure de type Rusk XF40.

Par contre on observe, lors de la cuisson four, un rendement four inférieur à 100% qui a pour conséquence de faire baisser le rendement final de 2 points.

**EXEMPLE 3 : Fabrication de "nuggets" de poulet mais avec cuisson à coeur avant préfritage.**

On utilise le même type de substrat que dans l'Exemple 1.

Les produits sont enrobés suivant ce procédé.

| | | |
|---|---|---|
| **MISE EN FORME SUBSTRAT** | | Poids : 170gr (12 pièces) |
| ↓ | | |
| **PREFARINAGE** | Predust type XF40 | Poids : 175 gr Prise de poids : 3% |
| ↓ | | |
| **CUISSON FOUR (FOUR SPIRALE)** | Température :82°C Point de rosée :82°C Temps = 4 minutes | Poids : 188 gr Rendement four : 107.4% |
| ↓ | | |
| **ENROBANT LIQUIDE** | Enrobant type Batter 66306 Dilution = 1 part poudre / 2 parts d'eau | |
| ↓ | | |
| **ENROBANT SEC** | Enrobant type Chapelure Frokrum 21250 | Poids : 259 gr Prise de poids : 34.4% |
| ↓ | | |
| **PREFRITAGE** | Température 182°C Temps = 41 secondes | Poids final : 256 gr Rendement friteuse: 99% |
| ↓ | | |
| **SURGELATION** | | |

Les produits congelés sont réchauffés comme dans l'Exemple 1. Après réchauffage on observe une absence totale d'adhérence de l'enrobant sur le substrat, une absence de croustillance ainsi qu'une gangue farineuse à l'interface substrat enrobant.

Cet exemple démontre que les ingrédients utilisés dans le procédé cité à l'exemple N°1 ne donnent pas satisfaction et que pour répondre aux exigences de la technique, on est amené à modifier la composition du système.

## Exemple 4

Les mêmes produits qui sont cités dans l'exemple N°1 sont enrobés suivant le procédé suivant.

```
┌─────────────────┐
│  MISE EN FORME  │                                        Poids : 143 gr
│    SUBSTRAT     │                                         (10 pièces)
└─────────────────┘
         ↓
┌─────────────────┐
│   PREFARINAGE   │  Predust type XF40                     Poids : 148 gr
└─────────────────┘                                   Prise de poids : 3.4%
         ↓
┌─────────────────┐  Température : 82°C                    Poids : 159 gr
│  CUISSON FOUR   │  Point de rosée : 82°C           Rendement four: 107.4%
└─────────────────┘  Temps = 4 minutes
         ↓
┌─────────────────┐
│    ENROBANT     │  Enrobant de type RF51331              Poids : 162 gr
│      SEC        │                                  Prise de poids : 1.85%
└─────────────────┘
         ↓
┌─────────────────┐  Enrobant de type RF51332              Poids : 221 gr
│    ENROBANT     │  Dilution = 1 part de poudre /
│    LIQUIDE      │  1.2 parts d'eau
│ (type TEMPURA)  │
└─────────────────┘
         ↓
┌─────────────────┐  Température 195°C                     Poids : 219 gr
│   PREFRITAGE    │  Temps = 30 secondes           Prise de poids total : 34.7%
└─────────────────┘                                 Rendement friteuse :99%
         ↓
┌─────────────────┐
│   SURGELATION   │
└─────────────────┘
```

Les produits surgelés sont réchauffés en friteuse à une température de 182°C pendant 4 minutes 10 secondes. On fait les mêmes observations que dans l'exemple 3, c'est-à-dire manque d'adhérence, manque de croustillance, texture désagréable.

Cet exemple montre que les résultats sont donc décevants quelque soit le type d'enrobant (sec ou liquide) appliqué sur la composition de préfarinage après la cuisson à coeur dans un four.

## Exemple 5

Les mêmes produits qui sont cités dans l'exemple N°1 sont enrobés suivant le procédé suivant.

| MISE EN FORME SUBSTRAT | | Poids : 289gr (20 pièces) |
|---|---|---|
| ↓ | | |
| PREFARINAGE | Predust N°1 selon l'invention | Poids : 300gr Prise en poids : 3.7% |
| ↓ | | |
| CUISSON FOUR | Température : 82°C Point de rosée : 82°C Temps = 4 minutes | Poids : 336gr Rendement four : 112% |
| ↓ | | |
| ENROBANT SEC | Enrobant de type RF51331 | Poids : 346gr Prise en poids 2.9% |
| ↓ | | |
| ENROBANT LIQUIDE | Enrobant de type RF51332 Dilution = 1 part de poudre / 1.2 parts d'eau | Poids : 493gr |
| ↓ | | |
| PREFRITAGE | Température 195°C Temps = 30 secondes | Poids : 483gr Prise en poids total:42.2% Rendement friteuse = 98% |
| ↓ | | |
| SURGELATION | | |

Le predust N°1, conforme à l'invention, a la composition suivante :

| | |
|---|---|
| - Semoule de maïs de type S50 de la Société Champagne Maïs | 34.5% |
| - Amidon de blé Saphir de la Société Crespel & Deiters | 30.0% |
| - Rusk XF40 | 35.0% |
| - Huile de colza | 0.5% |

Les produits congelés sont réchauffés en friteuse à une température de 182°C pendant 4 minutes 10 secondes. On observe une bonne adhérence de l'enrobant sur le substrat, une bonne croustillance ainsi qu'une bonne texture.
Cet exemple montre qu'une composition de préfarinage conforme à l'invention permet d'obtenir des produits de qualité répondant aux attentes en la matière.

## Exemple 6

On utilise le même type de substrat que dans l'Exemple 1. ,

| MISE EN FORME SUBSTRAT | | Poids : 143gr (10 pièces) |
|---|---|---|
| ↓ | | |
| PREFARINAGE | Predust N°2 selon l'invention | Poids : 148gr Prise en poids : 3.4% |
| ↓ | | |
| CUISSON FOUR | Température : 82°C Point de rosée : 82°C Temps = 4 minutes | Poids : 164gr Rendement four : 110.8% |
| ↓ | | |
| ENROBANT SEC | Enrobant de type RF51331 | Poids : 168gr Prise en poids 2.4% |
| ↓ | | |
| ENROBANT LIQUIDE | Enrobant de type RF51332 Dilution = 1 part de poudre / 1.2 parts d'eau | Poids : 231gr |
| ↓ | | |
| PREFRITAGE | Température 195°C Temps = 30 secondes | Poids : 230gr Prise en poids total:37.8% Rendement friteuse = 99.5% |
| ↓ | | |
| SURGELATION | | |

Le predust N°2, conforme à l'invention, a la composition suivante :

| | |
|---|---|
| - Semoule de maïs de type S50 de la Société Champagne Maïs | 44.5% |
| - Amidon de blé Saphir de la Société Crespel & Deiters | 25.0% |
| - Rusk XF40 | 30.0% |
| - Huile de colza | 0.5% |

Les produits congelés sont réchauffés en friteuse à une température de 182°C pendant 4 minutes 10 secondes. On constate une bonne adhérence, une bonne croustillance et une bonne texture.

**Exemple 7**

On utilise le même type de substrat que l'Exemple 1.

```
┌─────────────────┐
│  MISE EN FORME  │                                          Poids : 143gr
│     SUBSTRAT    │                                          (10 pièces)
└─────────────────┘
         ↓
┌─────────────────┐ Predust N°3                              Poids : 149gr
│   PREFARINAGE   │ selon l'invention                     Prise en poids : 4%
└─────────────────┘
         ↓
┌─────────────────┐ Température :  82°C                      Poids :  165gr
│  CUISSON FOUR   │ Point de rosée : 82°C              Rendement four : 110.7%
└─────────────────┘ Temps = 4 minutes
         ↓
┌─────────────────┐ Enrobant de type RF51331                 Poids : 167gr
│    ENROBANT     │                                     Prise en poids 1.2%
│      SEC        │
└─────────────────┘
         ↓
┌─────────────────┐ Enrobant de type RF51332                 Poids : 218gr
│    ENROBANT     │ Dilution = 1 part de poudre /
│    LIQUIDE      │ 1.2 parts d'eau
└─────────────────┘
         ↓
┌─────────────────┐ Température 195°C                         Poids : 217gr
│   PREFRITAGE    │ Temps = 30 secondes           Prise en poids total:34.1%
└─────────────────┘                               Rendement friteuse = 99.5%
         ↓
┌─────────────────┐
│   SURGELATION   │
└─────────────────┘
```

Le predust N°3, conforme à l'invention, a la composition suivante :

| - Semoule de maïs de type S50 de la Société Champagne Maïs | 20.0% |
| - Amidon de blé Saphir de la Société Crespel & Deiters | 30.0% |
| - Rusk XF40 | 49.5% |
| - Huile de colza | 0.5% |

Les produits congelés sont réchauffés en friteuse à une température de 182°C pendant 4 minutes 10 secondes. On observe une bonne adhérence, une bonne croustillance et une bonne texture.

## Exemple 8

On utilise le même type de substrat que dans l'Exemple 1.

```
┌─────────────────┐
│  MISE EN FORME  │                                    Poids : 141gr
│     SUBSTRAT    │                                    (10 pièces)
└─────────────────┘
         ↓
┌─────────────────┐  Predust N°4                       Poids : 148gr
│   PREFARINAGE   │  selon l'invention                 Prise en poids : 4.7%
└─────────────────┘
         ↓
┌─────────────────┐  Température :  82°C               Poids :  161gr
│  CUISSON FOUR   │  Point de rosée : 82°C             Rendement four : 108.8%
└─────────────────┘  Temps = 4 minutes
         ↓
┌─────────────────┐  Enrobant de type RF51331          Poids : 164gr
│    ENROBANT     │                                    Prise en poids 1.8%
│      SEC        │
└─────────────────┘
         ↓
┌─────────────────┐  Enrobant de type RF51332          Poids : 214gr
│    ENROBANT     │  Dilution = 1 part de poudre /
│    LIQUIDE      │  1.2 parts d'eau
└─────────────────┘
         ↓
┌─────────────────┐  Température 195°C                 Poids : 214gr
│   PREFRITAGE    │  Temps = 30 secondes               Prise en poids totale:34%
└─────────────────┘                                    Rendement friteuse = 100%
         ↓
┌─────────────────┐
│   SURGELATION   │
└─────────────────┘
```

Le predust N°4, conforme à l'invention, a la composition suivante :

| | |
|---|---|
| - Semoule de maïs de type S50 de la Société Champagne Maïs | 30.0% |
| - Amidon de blé Saphir de la Société Crespel & Deiters | 29.5% |
| - Rusk XF40 - Protarmor 865 de la Société Armor | 30.0% 10.0% |
| Protéines - Huile de colza | 0.5% |

Les produits congelés sont réchauffés en friteuse à une température de 182°C pendant 4 minutes 10 secondes. On constate une bonne adhérence, une bonne croustillance et une bonne texture. Cet exemple démontre en particulier que les protéines de lait peuvent remplacer avantageusement du blanc d'oeuf dans une composition de préfarinage conforme à l'invention.

**Revendications**

1.    Composition de préfarinage pour la fabrication de produits alimentaires enrobés cuits à coeur, comprenant :

- une semoule de maïs,
- un amidon modifié,
- et une fine chapelure, celle-ci comportant de préférence un agent levant.

2.    Composition de préfarinage selon la revendication 1, **caractérisée par le fait que** par rapport au poids total de la composition, elle comprend :

- de 5 à 70%, de préférence de 10 à 60%, et plus préférentiellement encore de 15 à 50% de semoule de maïs,
- de 5 à 70%, de préférence de 10 à 60%, et plus préférentiellement encore de 15 à 50% d'amidon modifié,
- de 10 à 70%, de préférence de 15 à 60%, et plus préférentiellement encore de 20 à 55% de fine chapelure.

**3.** Composition de préfarinage selon l'une ou l'autre des revendications 1 et 2, **caractérisée par le fait que** l'amidon modifié est choisi parmi les amidons réticulés estérifiés, les amidons oxydés ou leurs mélanges.

**4.** Composition de préfarinage selon l'une quelconque des revendications 1 à 3, **caractérisée par le fait que** la semoule de maïs présente une granulométrie telle que 95% des particules ont une dimension inférieure à 710 microns.

**5.** Composition selon l'une quelconque des revendications 1 à 4, **caractérisée par le fait que** la fine chapelure présente une granulométrie telle que 95% des particules ont une dimension inférieure à 710 microns.

**6.** Composition selon l'une quelconque des revendications 1 à 5, **caractérisée par le fait qu'**elle présente une hauteur de cône d'écoulement, mesurée selon un test A, comprise entre 2.5 cm et 6 cm, de préférence entre 3.5 cm et 4.5 cm.

**7.** Composition selon l'une quelconque des revendications 1 à 6, **caractérisée par le fait qu'**elle présente une capacité d'absorption d'eau par unité de poids après cuisson au four en atmosphère saturée, mesurée selon un test B, comprise entre 200% et 400%, de préférence entre 200% et 350%.

**8.** Procédé de fabrication d'un produit alimentaire enrobé cuit à coeur, comprenant :

- une étape de sélection d'un substrat alimentaire,
- une étape de préfarinage,
- une étape de cuisson à coeur,
- une étape d'enrobage,
- une étape de préfritage,
- une étape de refroidissement,

**caractérisé par le fait que** l'étape de préfarinage est réalisée avec une composition comprenant une semoule de maïs, un amidon modifié et une fine chapelure, et que l'étape de cuisson à coeur est réalisée avant l'étape de préfritage.

**9.** Procédé selon la revendication 8, **caractérisé par le fait que** l'étape de cuisson à coeur est réalisée de telle manière que la température au coeur du produit atteigne au moins 70°C lorsqu'il s'agit de légumes, de fruits, de poissons ou de viandes désossées, et atteigne une température d'au moins 85°C lorsqu'il s'agit de viandes avec os.

**10.** Procédé selon l'une ou l'autre des revendications 8 et 9, **caractérisé par le fait que** l'étape de préfritage est réalisée par exemple dans une friteuse continue, à des températures comprises le plus généralement entre 175°C et 205°C, pour des temps de préfritage compris entre 15 secondes et 1 minute.

**11.** Procédé selon l'une quelconque des revendications 8 à 10, **caractérisé par le fait que** la quantité de composition de préfarinage qui est apportée sur le substrat alimentaire lors de l'étape de préfarinage est généralement comprise entre 0.5% et 14% en poids du substrat alimentaire, de préférence comprise entre 1% et 10% et plus préférentiellement encore entre 3 et 6%.

**12.** Utilisation pour la fabrication de produits alimentaires enrobés cuits à coeur d'une composition de préfarinage comprenant une semoule de maïs, un amidon modifié et une fine chapelure.


**Patentansprüche**

**1.** Zusammensetzung zur Vorbestäubung (predusting) für die Herstellung von beschichteten und bis zum Kern gebackenen Nahrungsmittelprodukten, umfassend:

- Maisgries,

- modifizierte Stärke
- und ein feines Paniermehl, wobei dieses vorzugsweise ein Treibmittel umfaßt.

2. Zusammensetzung zur Vorbestäubung gemäß Anspruch 1, **dadurch gekennzeichnet, daß** in Bezug auf das Gesamtgewicht der Zusammensetzung sie folgendes umfaßt:

- 5 bis 70 %, vorzugsweise 10 bis 60 % und noch bevorzugter 15 bis 50 % Maisgries,

- 5 bis 70 %, vorzugsweise 10 bis 60 % und noch bevorzugter 15 bis 50 % modifizierte Stärke,

- 10 bis 70 %, vorzugsweise 15 bis 60 % und noch bevorzugter 20 bis 55 % feines Paniermehl.

3. Zusammensetzung zur Vorbestäubung gemäß einem der Ansprüche 1 bis 2, **dadurch gekennzeichnet, daß** die modifizierte Stärke ausgewählt ist aus den vernetzten veresterten Stärken, den oxidierten Stärken und ihren Mischungen.

4. Zusammensetzung zur Vorbestäubung gemäß einem der Ansprüche 1 bis 3, **dadurch gekennzeichnet, daß** der Maisgries eine derartige Granulometrie darstellt, daß 95 % der Teilchen eine Größe unterhalb von 710 µm aufweisen.

5. Zusammensetzung gemäß einem der Ansprüche 1 bis 4, **dadurch gekennzeichnet, daß** das feine Paniermehl eine Granulometrie aufweist, so daß 95 % der Teilchen eine Größe unterhalb von 710 µm aufweisen.

6. Zusammensetzung gemäß einem der Ansprüche 1 bis 5, **dadurch gekennzeichnet, daß** sie eine Abflußkonushöhe, gemessen gemäß Test A, zwischen 2,5 und 6 cm, vorzugsweise zwischen 3,5 und 4,5 cm, aufweist.

7. Zusammensetzung gemäß einem der Ansprüche 1 bis 6, **dadurch gekennzeichnet, daß** sie eine Wasserabsorptionsfähigkeit pro Gewichtseinheit nach einem Backen im Ofen in gesättigter Atmosphäre, gemessen gemäß Test B, zwischen 200 und 400 %, vorzugsweise zwischen 200 und 350 %, aufweist.

8. Herstellungsverfahren eines beschichteten und bis zum Kern gebackenen Nahrungsmittelprodukts, umfassend:

- einen Schritt der Auswahl eines Nahrungssubstrats,
- einen Schritt der Vorbestäubung,
- einen Backschritt bis zum Kern,
- einen Beschichtungsschritt,
- einen Vor-Frittierschritt,
- einen Abkühlschritt,

**dadurch gekennzeichnet, daß** der Schritt der Vorbestäubung mit einer Zusammensetzung realisiert wird, umfassend Maisgries, modifizierte Stärke und ein feines Paniermehl, und daß der Backschritt bis zum Kern vor dem Vor-Frittierschritt realisiert wird.

9. Verfahren gemäß Anspruch 8, **dadurch gekennzeichnet, daß** der Backschritt bis zum Kern in einer Art und Weise durchgeführt wird, daß die Kerntemperatur des Produkts mindestens 70°C erreicht, wenn es sich um Gemüse, Früchte, Fisch oder entbeintes Fleisch handelt, und eine Temperatur von mindestens 85°C erreicht, wenn es sich um Fleisch mit Knochen handelt.

10. Verfahren gemäß einem der Ansprüche 8 und 9, **dadurch gekennzeichnet, daß** der Vor-Frittierschritt zum Beispiel in einer kontinuierlichen Friteuse durchgeführt wird bei Temperaturen umfassend vorrangig 175 bis 205°C für eine Vor-Frittierzeit zwischen 15 Sekunden und 1 Minute.

11. Verfahren gemäß einem der Ansprüche 8 bis 10, **dadurch gekennzeichnet, daß** die Menge der Zusammensetzung der Vorbestäubung, die auf das Nahrungssubstrat im Schritt der Vorbestäubung aufgebracht wird, im allgemeinen zwischen 0,5 und 14 Gew.% des Nahrungssubstrats liegt, vorzugsweise zwischen 1 und 10 % und besonders bevorzugt zwischen 3 und 6 %.

12. Verwendung einer Zusammensetzung zur Vorbestäubung, umfassend Maisgries, modifizierte Stärke und ein feines Paniermehl, für die Herstellung beschichteter und bis zum Kern gebackener Nahrungsmittelprodukte.

**Claims**

1.  Pre-dusting composition for producing core-cooked, coated food products comprising:

    - a corn meal,
    - a modified starch
    - and fine breadcrumbs, the latter preferably incorporating a leavening agent.

2.  Pre-dusting composition as claimed in claim 1, **characterised in that** it comprises, by reference to the total weight of the composition:

    - 5 to 70 %, preferably 10 to 60 % and even more preferably 15 to 50 % of corn meal,
    - 5 to 70 %, preferably 10 to 60 % and even more preferably 15 to 50 % of modified starch.
    - 10 to 70 %, preferably 15 to 60% and even more preferably 20 to 55 % of fine breadcrumbs.

3.  Pre-dusting composition as claimed in one or the other of claims 1 and 2, **characterised in that** the modified starch is chosen from esterified, cross-linked starches, oxidised starches or mixtures thereof.

4.  Pre-dusting composition as claimed in any one of claims 1 to 3, **characterised in that** the grain size of the corn starch is such that 95 % of the particles have a dimension of less than 710 microns.

5.  Composition as claimed in any one of claims 1 to 4, **characterised in that** the grain size of the fine breadcrumbs is such that 95 % of the particles have a dimension of less than 710 microns.

6.  Composition as claimed in any one of claims 1 to 5, **characterised in that** it has a flow cone height, measured on the basis of a test A, of between 2.5 cm and 6 cm, preferably between 3.5 cm and 4.5 cm.

7.  Composition as claimed in any one of claims 1 to 6, **characterised in that** it has a water absorption capacity per unit of weight, after cooking in the oven in a saturated atmosphere, measured on the basis of a test B, of between 200 % and 400 %, preferably between 200 % and 350 %.

8.  Method of manufacturing a core-cooked, coated food product, comprising:

    - a step of selecting a food substrate,
    - a pre-dusting step,
    - a core cooking step,
    - a coating step,
    - a pre-frying step,
    - a cooling step,

    **characterised in that** the pre-dusting step is effected using a composition comprising a corn meal, a modified starch and breadcrumbs, and the core cooking step takes place before the pre-frying step.

9.  Method as claimed in claim 8, **characterised in that** the core cooking step is effected in such a way that the temperature at the core of the product reaches at least 70°C if it is vegetables, fruit, boned fish or meat, and reaches a temperature of at least 85°C if it is meat with bones.

10. Method as claimed in one or the other of claims 8 and 9, **characterised in that** the pre-frying step is effected in a continuous fryer at temperatures most generally ranging between 175°C and 205°C for pre-frying times ranging between 15 seconds and 1 minute.

11. Method as claimed in any one of claims 8 to 10, **characterised in that** the quantity of pre-dusting composition which is added to the food substrate during the pre-dusting step is generally between 0.5 % and 14 % by weight of the food substrate, preferably between 1 % and 10 % and even more preferably between 3 and 6 %.

12. Use of a pre-dusting composition comprising a corn meal, a modified starch and breadcrumbs for manufacturing core-cooked, coated food products.